# EUROPEAN PATENT APPLICATION

(11) **EP 4 697 129 A1**
(43) Date of publication of application: **18.02.2026**
(21) Application number: 24788658.3
(22) Date of filing: 04.04.2024
(51) Int. Cl.: G06F 1/16, F16M 11/04, H05K 5/02

(54) **STAND DEVICE**

(30) Priority: 11.04.2023 JP 2023064457
(71) Applicant: Sony Interactive Entertainment Inc., Tokyo 108-0075 (JP)
(72) Inventor: YOSHINO, Akira, Tokyo 108-0075 (JP); MASUDA, Hiroaki, Tokyo 108-0075 (JP); ISHIBASHI, Takayuki, Tokyo 108-0075 (JP); OOTORI, Yasuhiro, Tokyo 108-0075 (JP)
(74) Representative: Fish & Richardson P.C.
(86) International application number: PCT/JP2024/013971
(87) International publication number: WO 2024/214633

(57) **Abstract**

To configure an electronic-apparatus support structure with a simple structure, and to ensure the support stability for an electronic apparatus. A stand device (1) has an annular support member (10), and an attachment member (20) that is capable of being attached to an electronic apparatus (2) in the up-down direction. The support member (10) has first and second connecting sections (11a, 11b) to which the attachment member (20) is attached and first and second support sections (12a, 12b) that are positioned opposite to each other with the attachment member (20) being interposed therebetween in a direction crossing the up-down direction.

## Description

### [Technical Field]

The present disclosure relates to a stand device.

### [Background Art]

PTL 1 described below describes a stand device that can support an electronic apparatus. The stand device has a circular stand body and supports an electronic apparatus at the bottom surface of the stand body.

### [Citation List]

### [Patent Literature]

[PTL 1]
PCT Patent Publication No. WO2013/154041

### [Summary]

### [Technical Problem]

An object of the present disclosure is to configure an electronic-apparatus support structure with a simple structure and ensure the support stability for an electronic apparatus.

### [Solution to Problem]

A stand device according to the present disclosure has an annular support member, and an attachment member that is attached to the support member and is capable of being attached to an electronic apparatus in a first direction. The support member has a first connecting section and a second connecting section to which the attachment member is attached, and a first support section and a second support section that are positioned opposite to each other with the attachment member being interposed therebetween in a second direction crossing the first direction. This makes it possible to configure an electronic-apparatus support structure with a simple structure and ensure the support stability for an electronic apparatus.

### [Brief Description of Drawings]

[FIG. 1]

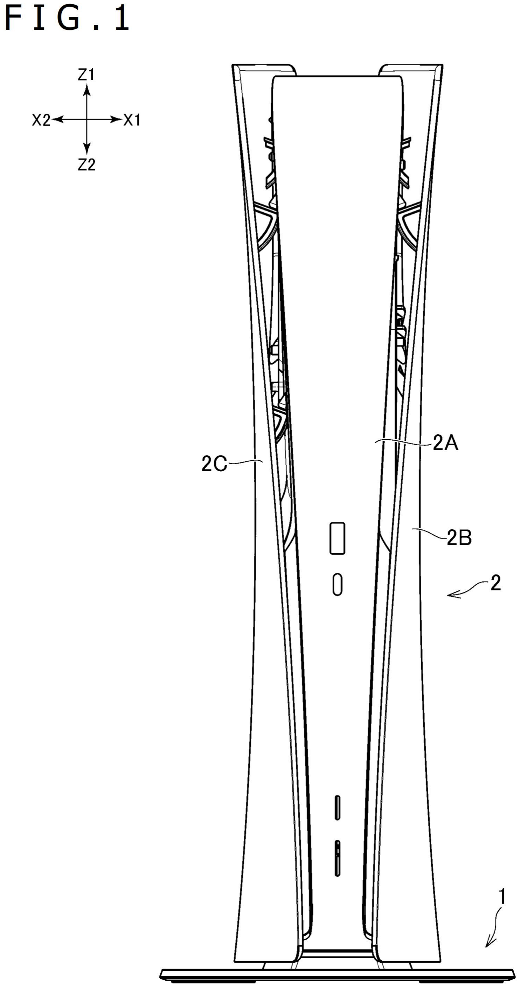

   FIG. 1 is a front view of an electronic apparatus in a state where a stand device which is an example of an embodiment proposed in the present disclosure is attached.
[FIG. 2]

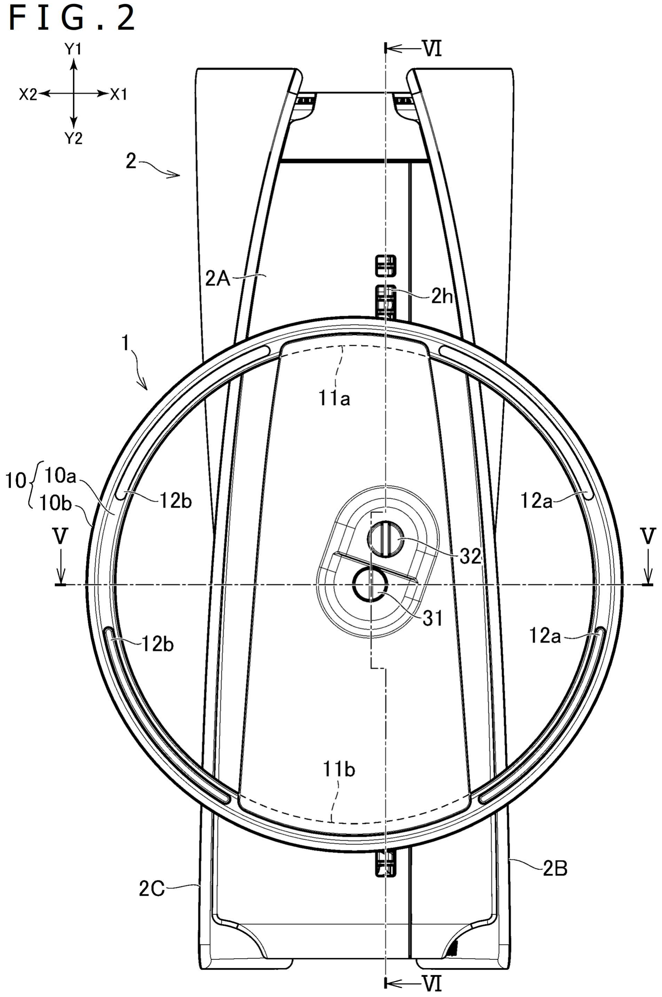

   FIG. 2 is a bottom view of the electronic apparatus in a state where the stand device is attached.
[FIG. 3A]

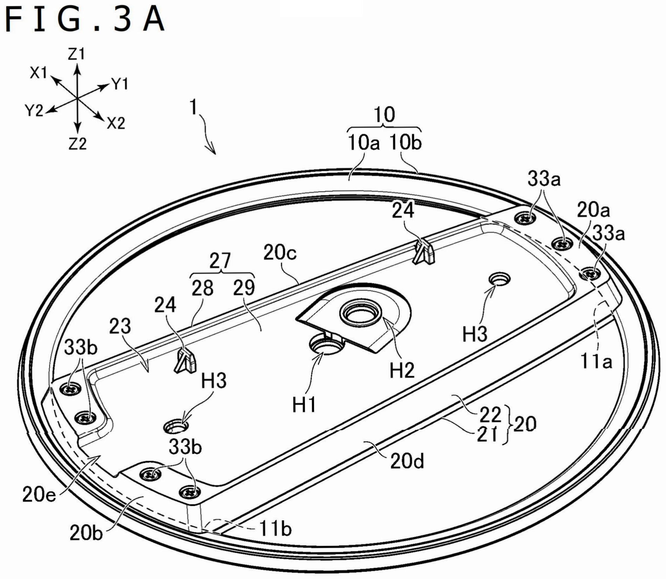

   FIG. 3A is a perspective view depicting the top side of the stand device.
[FIG. 3B]

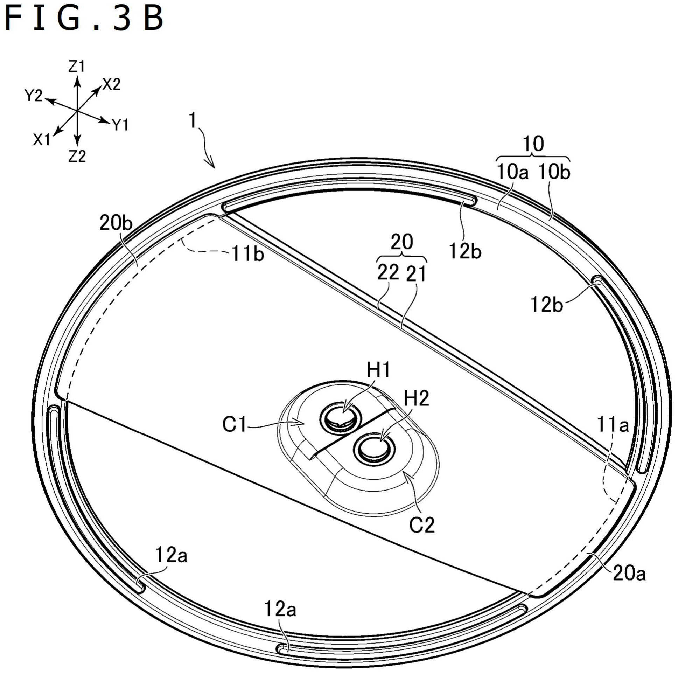

   FIG. 3B is a perspective view depicting the lower side of the stand device.
[FIG. 4A]

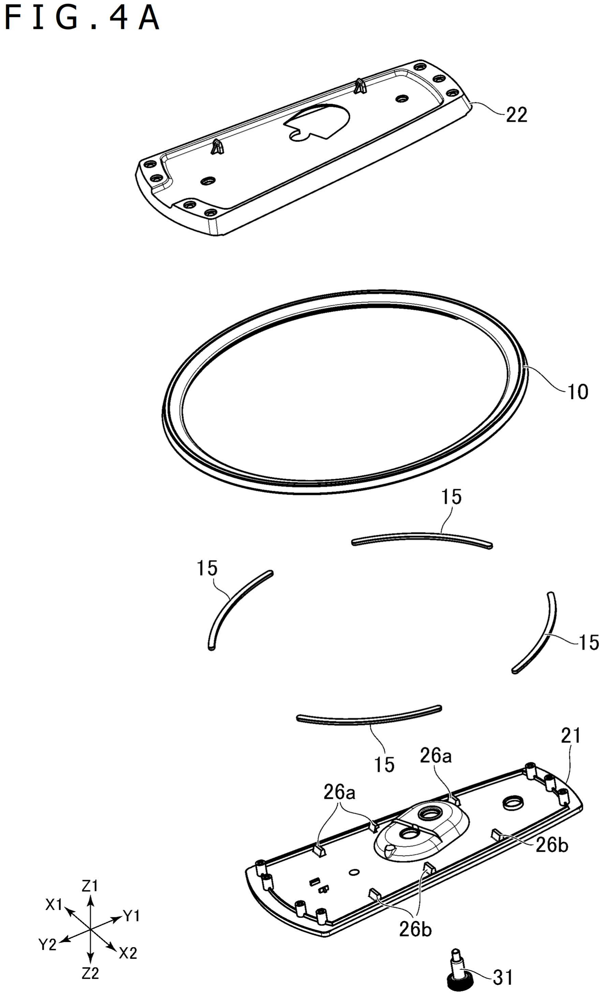

   FIG. 4A is an exploded perspective view of the stand device.
[FIG. 4B]

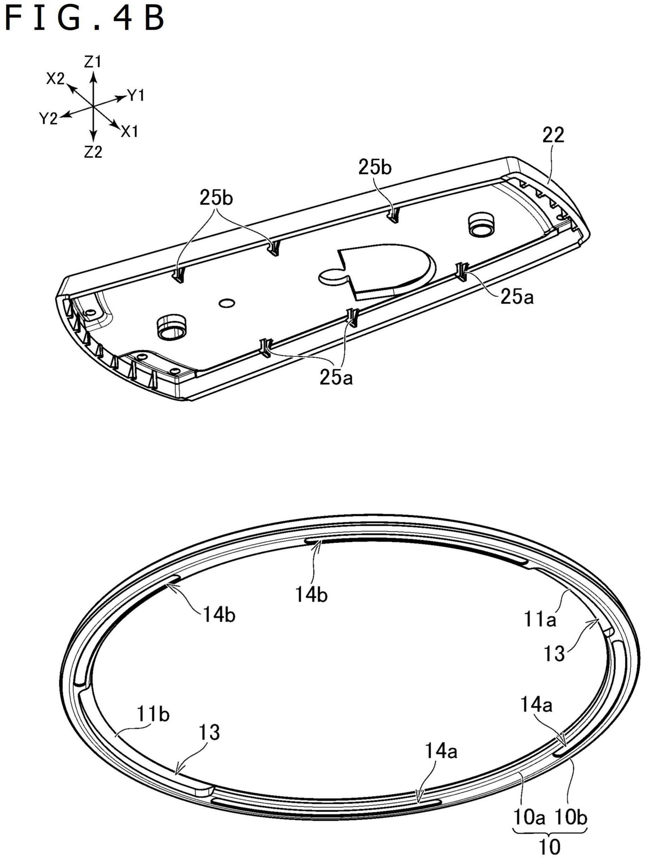

   FIG. 4B is a perspective view depicting a support member and an attachment member.
[FIG. 5]

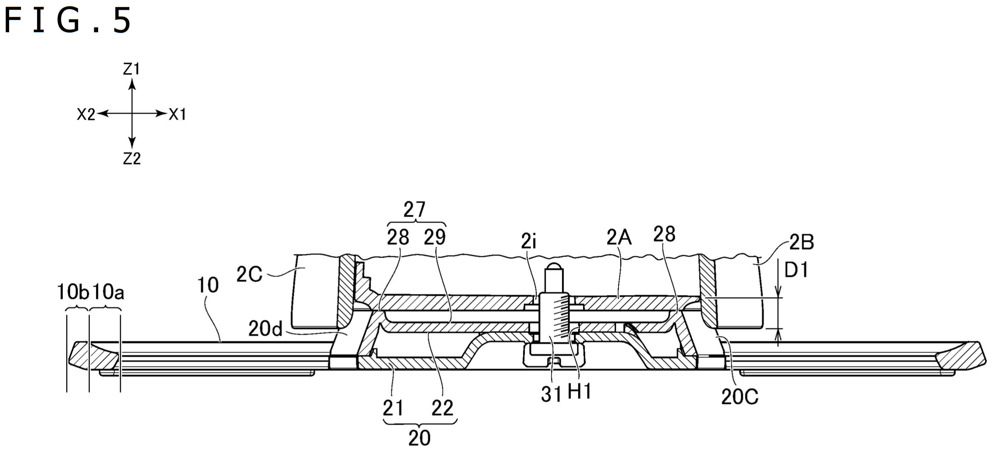

   FIG. 5 is a cross-sectional view of the stand device and the electronic apparatus taken along a line V-V in FIG. 2.
[FIG. 6]

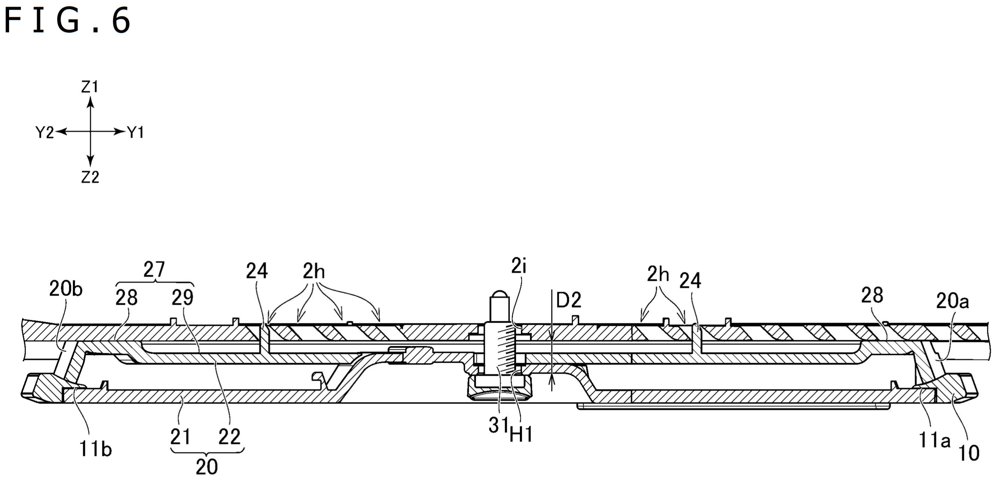

   FIG. 6 is a cross-sectional view of the stand device and the electronic apparatus taken along a line VI-VI in FIG. 2.
[FIG. 7]

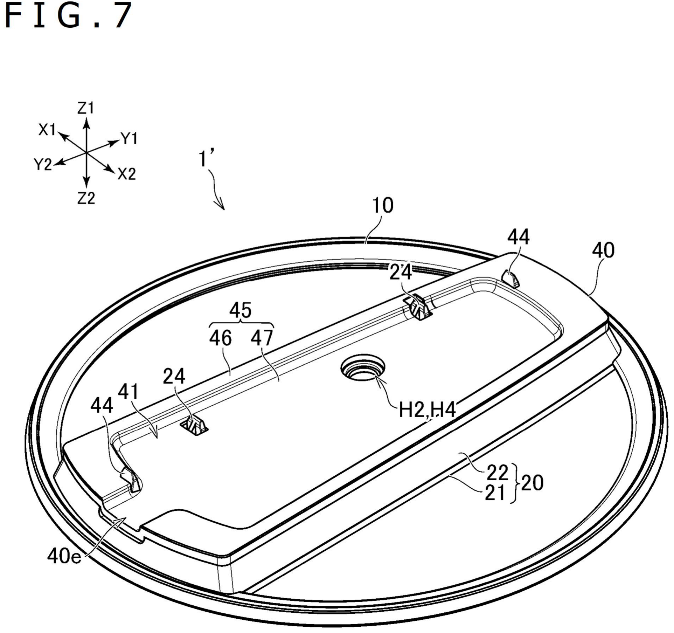

   FIG. 7 is a perspective view of a stand device which is another example of the embodiment.
[FIG. 8]

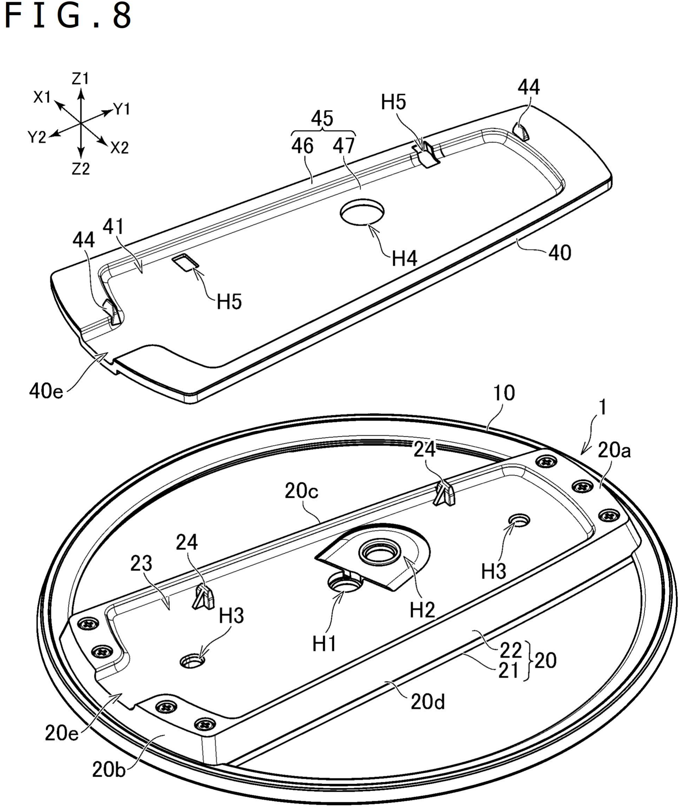

   FIG. 8 is an exploded perspective view of the stand device.
[FIG. 9]

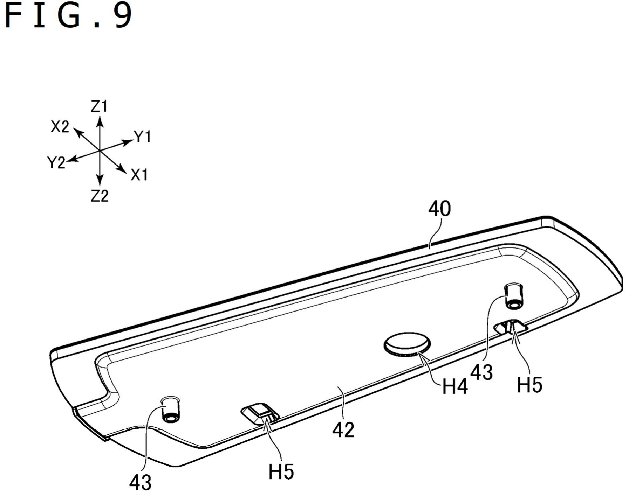

   FIG. 9 is a perspective view depicting the lower side of an accessory member.
[FIG. 10]

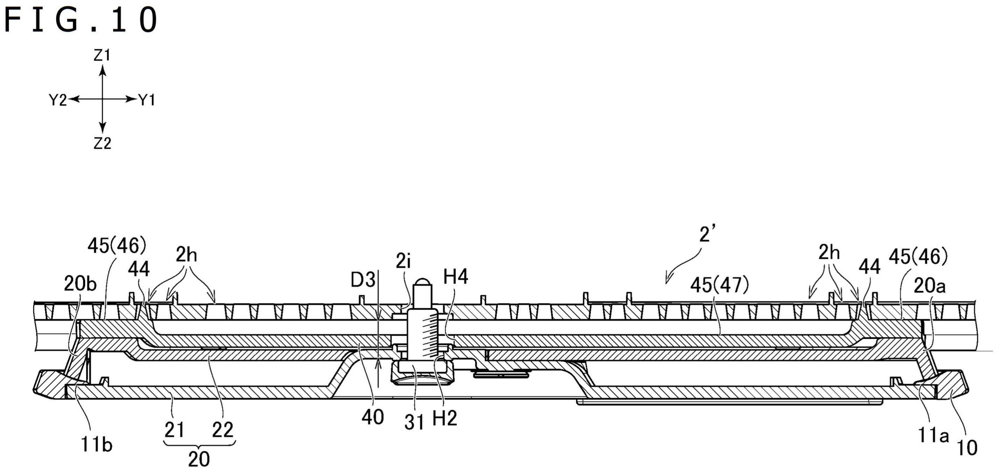

   FIG. 10 is a cross-sectional view of the stand device and an electronic apparatus.

### [Description of Embodiments]

The following explains a stand device proposed in the present disclosure. The stand device is installed on the upper surface of a stationary object (e.g., on a floor surface or a desk) which is an object fixed indoor or the like, and is capable of supporting an electronic apparatus with respect to the object.

FIG. 1 is a front view of an electronic apparatus 2 in a state where a stand device 1 is attached. FIG. 2 is a bottom view of the electronic apparatus 2 in a state where the stand device 1 is attached. In the following explanation, directions represented by Z1 and Z2 in FIG. 1 are referred to as the upward direction and the downward direction, respectively, and directions represented by Y1 and Y2 in FIG. 2 are referred to as the forward direction and the backward direction, respectively. In addition, directions represented by X1 and X2 in FIG. 1 are referred to as the right direction and the left direction, respectively.

The electronic apparatus 2 may be an information processing device. The electronic apparatus 2 may be a game device that executes game applications, a content generating device that reproduces content such as video or audio (music), or a personal computer. The electronic apparatus 2 may output moving image data generated by the execution of a game application to an output device (a display or speakers). The electronic apparatus 2 may output, to an output device, video or audio data acquired via a communication device, a recording medium (hard disk drive or solid state drive), or the like.

As depicted in FIG. 1, the electronic apparatus 2 has an apparatus body 2A. In addition, the electronic apparatus 2 may have a right exterior panel 2B covering the right-side surface of the apparatus body 2A and a left exterior panel 2C covering the left-side surface of the apparatus body 2A. The apparatus body 2A has a box shape and internally houses a circuit board, a heat dissipation device, and the like. The apparatus body 2A may have a power button and a connector on its front surface. As depicted in FIG. 2, ventilation ports 2h may be formed through the lower surface of the apparatus body 2A.

As depicted in FIG. 2, the stand device 1 may be attached to the electronic apparatus 2 (more specifically, the lower surface of the apparatus body 2A) via a fixture 31 such as a screw. For example, the stand device 1 is capable of supporting the electronic apparatus 2 in a posture depicted in FIG. 1. The following explains details of the stand device 1.

FIG. 3A is a perspective view depicting the top side of the stand device 1. FIG. 3B is a perspective view depicting the lower side of the stand device 1. FIG. 4A is an exploded perspective view of the stand device 1. FIG. 4B is a perspective view depicting the lower side of a support member 10 and an attachment member 20, mentioned later, of the stand device 1. FIG. 5 is a cross-sectional view of the stand device 1 and the electronic apparatus 2 taken along a line V-V in FIG. 2. FIG. 6 is a cross-sectional view of the stand device 1 and the electronic apparatus 2 taken along a line VI-VI in FIG. 2.

As depicted in FIG. 3A and FIG. 3B, the stand device 1 may have an annular support member 10 and the attachment member 20 that is capable of being attached to the electronic apparatus 2 in the up-down direction (in a first direction). The support member 10 may be formed using a material heavier than (having a specific gravity greater than) the attachment member 20. The support member 10 may be formed using a material harder than the attachment member 20. The attachment member 20 may be formed using resin, and the support member 10 may be formed using metal such as iron. This makes it possible to ensure the weight of the support member 10 and reduce the number of parts for allowing the stand device 1 to support the electronic apparatus 2. The support member 10 may be entirely formed using metal or may have a surface that is plated or coated. In the present embodiment, the support member 10 is not covered with resin.

As depicted in FIG. 4A and FIG. 4B, the support member 10 may have a circular shape. This makes it possible to process the support member 10 with use of a lathe, making the formation of the support member 10 easier. This is not the sole example, and the shape of the support member 10 may be a polygon such as a rectangle or may be another shape modeled after a character or a symbol.

As depicted in FIG. 3A, the attachment member 20 may have holes H1 and H2 penetrating the attachment member 20 in the up-down direction. The fixture 31 may be inserted into either of the holes H1 and H2. For example, the fixture 31 is inserted into the hole H1 from below, and is inserted into a hole 2i formed through the lower surface of the apparatus body 2A as depicted in FIG. 5 and FIG. 6. As a result, the attachment member 20 may be attached to the electronic apparatus 2 and fixed to the electronic apparatus 2.

In the present embodiment, the attachment member 20 has the two holes H1 and H2. As depicted in FIG. 2, the fixture 31 is inserted into either of the two holes H1 and H2. A cap 32 for closing one of the two holes H1 and H2 into which the fixture 31 is not inserted may be inserted into the hole. In addition, the number of holes in the attachment member 20 into which the fixture 31 can be inserted is not limited to two, and may be one or may be three. Making the number of holes equal to or greater than two makes it possible for the stand device 1 to support an electronic apparatus having a different shape, as mentioned later.

As depicted in FIG. 3B, the support member 10 may have a first connecting section 11a and a second connecting section 11b to which the attachment member 20 is attached. The first connecting section 11a and the second connecting section 11b may be positioned opposite to each other with the holes H1 and H2 of the attachment member 20 being interposed therebetween in a direction (front-rear direction) crossing the up-down direction (first direction). In the following explanation, the first connecting section 11a and the second connecting section 11b are also simply referred to as connecting sections 11a and 11b.

As depicted in FIG. 3B, the support member 10 may have a first support section 12a and a second support section 12b that support the stand device 1 and the electronic apparatus 2 with respect to a stationary object such as a floor surface. The first support section 12a and the second support section 12b may be positioned opposite to each other with the attachment member 20 being interposed therebetween in a direction (left-right direction, second direction) crossing the up-down direction (first direction). In the following explanation, the first support section 12a and the second support section 12b are also simply referred to as support sections 12a and 12b.

The stand device 1 has a structure in which the attachment member 20 is attached to the annular support member 10. This allows the stand device 1 to be configured with a simple structure. In addition, by attaching the attachment member 20 to the support member 10 at the two connecting sections 11a and 11b, the rigidity of the attachment member 20 and the support member 10 can be ensured. This can enhance the support stability for the electronic apparatus 2.

As depicted in FIG. 4B, recessed sections 14a and 14b may be formed on the lower side of the support member 10. The support sections 12a and 12b may be configured on the inner side of the recessed sections 14a and 14b by an anti-slip member 15 (see FIG. 4A) such as rubber being attached. The anti-slip member 15 may be fixed on the inner side of the recessed section 14a by an adhesive or a bond. This prevents slippage of the stand device 1 with respect to a stationary object such as a floor surface.

The attachment member 20 may include a base member 21 and a cover member 22 depicted in FIG. 4A. The base member 21 and the cover member 22 may be combined with each other in the up-down direction, sandwich at least one connecting section of the first connecting section 11a and the second connecting section 11b of the support member 10 depicted in FIG. 4B, and be attached to the at least one connecting section (the first connecting section 11a and/or the second connecting section 11b). As depicted in FIG. 3A, FIG. 3B, and FIG. 6, the attachment member 20 may have an end portion (a front-side end portion 20a or a rear-side end portion 20b) that sandwiches at least one connecting section of the first connecting section 11a and the second connecting section 11b in the up-down direction (first direction). Hence, as depicted in FIG. 4B, an attachment hole such as a screw hole is not formed through the at least one connecting section. The at least one connecting section may be formed on a surface continuously extending over the entire area overlapping the attachment member 20 in a plan view. This allows the rigidity of the support member 10 to be ensured at the one connecting section.

In the present embodiment, as depicted in FIG. 3A, FIG. 3B, and FIG. 6, the base member 21 and the cover member 22 of the attachment member 20 sandwich both the first connecting section 11a and the second connecting section 11b of the support member 10, and are attached to the first connecting section 11a and the second connecting section 11b. The attachment member 20 has the two end portions (the front-side end portion 20a and the rear-side end portion 20b) that sandwich the first connecting section 11a and the second connecting section 11b in the up-down direction, respectively. This makes it unnecessary to form attachment holes for both the connecting sections 11a and 11b. Both the connecting sections 11a and 11b may be formed on a surface continuously extending over the entire area overlapping the attachment member 20 in a plan view. This allows the rigidity of the support member 10 to be ensured at both the connecting sections 11a and 11b.

One connecting section of the first connecting section 11a and the second connecting section 11b of the support member 10 to which the attachment member 20 is attached may be formed at an inner circumference 10a of the support member 10. An outer circumference 10b of the support member 10 may be exposed through the attachment member 20 at the one connecting section (the first connecting section 11a and/or the second connecting section 11b). This allows the outer circumference 10b of the support member 10 to be increased in size at the one connecting section and the rigidity of the support member 10 to be ensured.

In the present embodiment, as depicted in FIG. 3A and FIG. 3B, both the first connecting section 11a and the second connecting section 11b of the support member 10 are formed at the inner circumference 10a of the support member 10. Further, the outer circumference 10b of the support member 10 is exposed through the attachment member 20 at the first connecting section 11a and the second connecting section 11b of the support member 10. As a result, the outer circumference 10b of the support member 10 can be increased in size at both the connecting sections 11a and 11b. In the present embodiment, the entire area of the outer circumference 10b of the support member 10 is exposed through the attachment member 20.

As depicted in FIG. 5, the support member 10 may be formed such that the thickness of the outer circumference 10b in the up-down direction is greater than the thickness of the inner circumference 10a in the up-down direction. Increasing the thickness of the outer circumference 10b in this manner can ensure the rigidity of the support member 10. In addition, external impacts of the support member 10 are received by the outer circumference 10b with the greater thickness, and this allows the protection of the inner circumference 10a with the smaller thickness.

The base member 21 and the cover member 22 of the attachment member 20 may be fixed by a plurality of fixtures such as screws in a state where the base member 21 and the cover member 22 are combined with each other in the up-down direction. As depicted in FIG. 3A, the attachment member 20 may have the front-side end portion 20a and the rear-side end portion 20b, and a plurality of fixtures 33a and 33b may be inserted into the end portion 20a and end portion 20b, respectively. The plurality of fixtures 33a may be arranged along the front-side inner circumferential edge of the circular support member 10. In addition, the plurality of fixtures 33b may be arranged along the rear-side inner circumferential edge of the support member 10. Fixing the base member 21 and the cover member 22 to each other with use of the plurality of fixtures 33a and 33b in this manner makes it possible to rigidly sandwich the support member with the base member 21 and the cover member 22. Whereas the number of the fixtures 33a is three and the number of the fixtures 33b is four in FIG. 3A, the numbers of the fixtures 33a and 33b are not necessarily limited to these.

One member of the base member 21 and the cover member 22 of the attachment member 20 may have claws to be caught by the other member. In the present embodiment, as depicted in FIG. 4B, the cover member 22 has a plurality of claws 25a and 25b. In addition, as depicted in FIG. 4A, the base member 21 has a plurality of engaged sections 26a and 26b to be caught by the claws 25a and 25b. The cover member 22 depicted in FIG. 4B has the plurality of claws 25a that are arrayed along the right-side edge of the cover member 22 and the plurality of claws 25b that are arrayed along the left-side edge of the cover member 22. In addition, the base member 21 depicted in FIG. 4A has the plurality of engaged sections 26a that are arrayed along the right-side edge of the base member 21 and the plurality of engaged sections 26b that are arrayed along the left-side edge of the base member 21. The plurality of claws 25a and 25b are formed at positions corresponding to the same number of the engaged sections 26a and 26b (the same positions in directions along the X axis and the Y axis). In addition, all of the plurality of claws 25a and 25b face the same direction (the backward direction in the example depicted in FIG. 4B). Hence, the cover member 22 can be fitted to the base member 21 by being slid in the direction (backward direction) in which the plurality of claws 25a and 25b face with respect to the base member 21. Whereas the number of the claws 25a and 25b and the number of the engaged sections 26a and 26b are six in the present embodiment, the number of the claws 25a and 25b and the number of the engaged sections 26a and 26b are not necessarily limited to this.

As depicted in FIG. 4B, recessed sections 13a and 13b may be formed on the lower side of the inner circumference 10a of the support member 10. The recessed section 13a may be positioned on the front side of the inner circumference 10a, and the recessed section 13b may be positioned on the rear side of the inner circumference 10a. The first connecting section 11a where the attachment member 20 is attached at the support member 10 may include the front-side recessed section 13a. Similarly to this, the second connecting section 11b may include the rear-side recessed section 13b. The base member 21 may be fitted to the recessed sections 13a and 13b. As a result, the position of the base member 21 (the attachment member 20 including the base member 21) in the circumferential direction of the support member 10 can be specified. In addition, the attachment member 20 can be prevented from moving relative to the support member 10.

As depicted in FIG. 3A, FIG. 5, and FIG. 6, the attachment member 20 may have a facing surface 27 that faces the electronic apparatus 2 (more specifically, the apparatus body 2A) in a state where the attachment member 20 is attached to the electronic apparatus 2. Here, as depicted in FIG. 5 and FIG. 6, the facing surface 27 may include a first surface 28 that contacts the outer surface (more specifically, the lower surface of the apparatus body 2A) of the electronic apparatus 2 and a second surface 29 that ensures a gap between the attachment member 20 and the outer surface (the lower surface of the apparatus body 2A) of the electronic apparatus 2. This makes it possible for the electronic apparatus 2 to contact the attachment member 20 on the first surface 28 and for the attachment member 20 to support the electronic apparatus 2. In addition, it is possible for the second surface 29 to form a gap between the attachment member 20 and the ventilation ports 2h formed on the electronic apparatus 2, and ensure an air flow path to the ventilation ports 2h (see FIG. 6).

As depicted in FIG. 3A, the facing surface 27 where the stand device 1 faces the electronic apparatus 2 may be defined by the upper surface of the attachment member 20 (more specifically, the cover member 22). In the present embodiment, the facing surface 27 is defined over the entire area of the upper surface of the attachment member 20. This is not the sole example, and a portion of the upper surface of the attachment member 20 may be the facing surface 27. In addition, as depicted in FIG. 3A, a recessed section 23 may be formed on the upper surface (facing surface 27) of the attachment member 20, the first surface 28 may be defined by the edge of the recessed section 23, and the second surface 29 may be defined by the bottom of the recessed section 23. As depicted in FIG. 3A, the first surface 28 may surround the second surface 29. The first surface 28 may be formed along the front-side end portion 20a, the rear-side end portion 20b, a right-side end portion 20c, and a left-side end portion 20d of the attachment member 20.

As depicted in FIG. 3A, a groove 20e linking the outside of the attachment member 20 and the inner side of the recessed section 23 may be formed at an end portion (e.g., the rear-side end portion 20b) of the attachment member 20. This allows an air flow path from the outside of the attachment member 20 to the ventilation ports 2h of the apparatus body 2A (see FIG. 6) to be ensured. Whereas the groove 20e is formed at the rear-side end 20b of the attachment member 20 in the example depicted in FIG. 3A, the groove 20e may be formed at the front-side end portion 20a, the right-side end portion 20c, or the left-side end portion 20d of the attachment member 20.

As depicted in FIG. 3A, the attachment member 20 may have protruding sections 24 protruding upward from the facing surface 27 (e.g., the second surface 29 defined by the bottom of the recessed section 23). The attachment member 20 may have two protruding sections 24. The two protruding sections 24 may be spaced apart from each other in a direction (e.g., the front-rear direction) crossing the up-down direction. In addition, the hole H1 into which the fixture 31 is inserted may be arranged between the two protruding sections 24 in a direction (e.g., the front-rear direction) crossing the up-down direction. The number of the protruding sections 24 formed on the attachment member 20 may be one or may be equal to or greater than three.

As depicted in FIG. 6, the protruding sections 24 formed on the facing surface 27 of the attachment member 20 may be inserted into the ventilation ports 2h of the electronic apparatus 2. In addition, the distance from the protruding sections 24 to the hole H1 into which the fixture 31 is inserted in the attachment member 20 may be the same as or close to the distance from the ventilation ports 2h of the electronic apparatus 2 to the hole 2i into which the fixture 31 is inserted. This makes it possible to align the positions of the hole H1 and the hole 2i in a state where the protruding sections 24 are inserted to the ventilation ports 2h, and to make the attachment of the stand device 1 to the electronic apparatus 2 easy.

As described above, in the present embodiment, the annular support member 10 has the connecting sections 11a and 11b, and the stand device 1 is configured by attaching the attachment member 20 to the connecting sections 11a and 11b. This allows the stand device 1 to be configured with a simple structure. In addition, by attaching the attachment member 20 to the support member 10 at the two connecting sections 11a and 11b, the rigidity of the attachment member 20 and the support member 10 can be ensured, and the support stability for the electronic apparatus 2 can be enhanced.

The present invention is not limited to the embodiment mentioned above. For example, a modified configuration of the embodiment can also be included in the technical scope of the present invention.

FIG. 7 is a perspective view of a stand device 1' which is another example of the embodiment. The stand device 1' depicted in FIG. 7 is capable of supporting an electronic apparatus, similarly to the stand device 1 explained in the embodiment. The stand device 1' is capable of supporting an electronic apparatus having a shape different from that of the electronic apparatus 2 explained in the embodiment.

FIG. 8 is an exploded perspective view of the stand device 1'. As depicted in FIG. 8, the stand device 1' may have an accessory member 40. The accessory member 40 may be formed using resin similarly to the attachment member 20. In addition, the accessory member 40 may be attached to the top side (more specifically, the upper surface of the attachment member 20) of the stand device 1 explained in the embodiment. This makes it possible to increase the height of the stand device 1 in the up-down direction, and to change the positions of protruding sections to be fitted to the ventilation ports 2h formed on the electronic apparatus. Increasing the height of the stand device 1 in the up-down direction makes it possible to support an electronic apparatus (e.g., an electronic apparatus 2' depicted in FIG. 10) whose distance D1 (see FIG. 5) from the lower surface of the apparatus body 2A to the lower end (or the left exterior panel 2C) of the right exterior panel 2B is long.

FIG. 9 is a perspective view depicting the lower side of the accessory member 40, which is a constituent element of the stand device 1'. Recessed sections 41 that are recessed downward may be formed on the upper surface of the accessory member 40 as depicted in FIG. 8, and protruding sections 42 that are protruding downward may be formed on the lower surface of the accessory member 40, which is on the side opposite to the upper surface of the accessory member 40, as depicted in FIG. 9. The protruding sections 42 of the accessory member 40 may have shapes corresponding to the recessed sections 23 and the groove 20e of the attachment member 20. In addition, the accessory member 40 may have cylindrical protruding sections 43 protruding downward from the protruding sections 42. This allows the accessory member 40 to fit to the upper surface of the attachment member 20, and makes it possible to prevent the position of the accessory member 40 from being misaligned with respect to the attachment member 20.

FIG. 10 is a cross-sectional view of the stand device 1' and the electronic apparatus 2'. As depicted in FIG. 7 and FIG. 10, similarly to the attachment member 20, the accessory member 40 may have a facing surface 45 that faces the electronic apparatus 2' in a state where the accessory member 40 is attached to the electronic apparatus 2'. The facing surface 45 may include a first surface 46 that contacts the outer surface (lower surface) of the electronic apparatus 2' and a second surface 47 that ensures a gap between the accessory member 40 and the outer surface (lower surface) of the electronic apparatus 2'. This also makes it possible to support the electronic apparatus 2' on the first surface 46 and ensure an air flow path to the ventilation ports 2h.

As depicted in FIG. 7, a groove 40e linking the outside of the accessory member 40 and the inner side of the recessed section 41 may be formed at an end portion (e.g., a rear-side end portion) of the accessory member 40, as in the attachment member 20. This allows an air flow path from the outside of the accessory member 40 to the ventilation ports 2h of the apparatus body (see FIG. 10) to be ensured. Whereas the groove 40e is formed at the rear-side end of the accessory member 40 in the example depicted in FIG. 7, the groove 40e may be formed at a front-side, right-side, or left-side end of the accessory member 40.

As depicted in FIG. 7, FIG. 8, and FIG. 10, the accessory member 40 has a hole H4 at the same position as the hole H2 of the attachment member 20. While the fixture 31 is inserted into the hole H1 of the attachment member 20 to fix the attachment member 20 to the electronic apparatus 2 in the embodiment, the one fixture 31 is inserted into the hole H2 of the attachment member 20 and the hole H4 of the accessory member 40 to fix the attachment member 20 and the accessory member 40 to the electronic apparatus 2' in the example depicted in FIG. 10. The fixture 31 is inserted into the holes H2 and H4 from below, and is inserted into the hole 2i formed through the lower surface of the electronic apparatus 2'. Making the number of holes on the stand device 1 equal to or greater than two in this manner makes it possible to attach the stand device 1' to which the accessory member 40 has been added to an electronic apparatus whose position of the hole 2i is different from that of the electronic apparatus 2. Although the hole H2 of the attachment member 20 is exposed through the hole H4 on the accessory member 40, the hole H1 of the attachment member 20 may be covered, and the hole H1 may be closed.

As depicted in FIG. 7, similarly to the attachment member 20, the accessory member 40 may have protruding sections 44 protruding upward from the facing surface 45 (e.g., the first surface 46 defined by the edge of the recessed section 41). The accessory member 40 may have two protruding sections 44. The two protruding sections 44 may be spaced apart from each other in a direction (e.g., the front-rear direction) crossing the up-down direction. In addition, the hole H2 and the hole H4 into which the fixture 31 is inserted may be arranged between the two protruding sections 44 in a direction (e.g., the front-rear direction) crossing the up-down direction. The number of the protruding sections 44 formed on the accessory member 40 may be one or may be equal to or greater than three.

As depicted in FIG. 10, the protruding sections 44 formed on the facing surface 45 of the accessory member 40 may be inserted into the ventilation ports 2h of the electronic apparatus 2. As depicted in FIG. 7, the protruding sections 44 of the accessory member 40 may be formed at positions different from the protruding sections 24 of the attachment member 20. In addition, the distance from the protruding sections 44 to the holes H2 and H4 into which the fixture 31 is inserted in the accessory member 40 may be the same as or close to the distance from the ventilation ports 2h of the electronic apparatus 2' depicted in FIG. 10 to the hole 2i into which the fixture 31 is inserted. This makes it possible to align the positions of the holes H2 and H4 and the hole 2i in a state where the protruding sections 44 are inserted to the ventilation ports 2h, and to make the attachment of the stand device 1' to the electronic apparatus 2' easy.

As depicted in FIG. 8, the facing surface 45 of the accessory member 40 may have holes H5 at the same positions as the protruding sections 24 of the attachment member 20. This allows the protruding sections 24 of the attachment member 20 to avoid interference with the lower surface of the accessory member 40 in a case where the accessory member 40 is attached to the attachment member 20. In addition, the first surface 46 that contacts the outer surface (lower surface) of the electronic apparatus 2' may be arranged at the same position as the top portion of the protruding section 24 or at a position higher than the top portion of the protruding section 24 in the up-down direction. This allows the protruding sections 24 to avoid interference with the electronic apparatus 2'. That is, using the accessory member 40 allows the positions of the protruding sections to be inserted into the hole 2i of the electronic apparatus 2' to be changed from the positions of the protruding sections 24 to the positions of the protruding sections 44.

In addition, as depicted in FIG. 3B, the two holes H1 and H2 formed on the attachment member 20 may be formed at recessed sections C1 and C2 that are recessed upward from the bottom surface of the attachment member 20. Here, the depth of the recessed section C2 where the hole H2 is formed may be greater than the depth of the recessed section C1 where the hole H1 is formed. This allows the distance (the distance to the first surface 28 on the facing surface 27) D2 from the lower edge of the hole H1 to the lower surface of the electronic apparatus 2 depicted in FIG. 6 and the distance (the distance to the first surface 46 on the facing surface 45) D3 from the lower edge of the hole H2 to the lower surface of the electronic apparatus 2' depicted in FIG. 10 to be made the same or close to each other. As a result, it becomes unnecessary to change the length of the fixture 31 to be used when the stand device 1 is attached to the electronic apparatus 2 and the length of the fixture 31 to be used when the stand device 1' is attached to the electronic apparatus 2'. That is, the same fixture 31 can be used for the attachment of the stand devices 1 and 1', and the number of parts of the stand devices 1 and 1' can be reduced.

### [4. Summary]

(1) As described above, a stand device explained in the present disclosure has an annular support member, and an attachment member that is attached to the support member and is capable of being attached to an electronic apparatus in a first direction. The support member has a first connecting section and a second connecting section to which the attachment member is attached, and a first support section and a second support section that are positioned opposite to each other with the attachment member being interposed therebetween in a second direction crossing the first direction. This makes it possible to configure an electronic-apparatus support structure with a simple structure and ensure the support stability for an electronic apparatus.
(2) In the stand device according to (1) described above, the attachment member may include a base member and a cover member. The base member and the cover member may be combined with each other in the first direction to sandwich at least one connecting section of the first connecting section and the second connecting section, and may be attached to the at least one connecting section.
(3) In the stand device according to (2) described above, the base member and the cover member may be combined with each other in the first direction to sandwich both the first connecting section and the second connecting section, and may be attached to the first connecting section and the second connecting section.
(4) In the stand device according to any one of (1) through (3) described above, the attachment member may have an end portion that sandwiches at least one connecting section of the first connecting section and the second connecting section in the first direction, and may be attached to the at least one connecting section by the end portion.
(5) In the stand device according to (4) described above, the attachment member may have two end portions that sandwich the first connecting section and the second connecting section in the first direction, respectively, and may be attached to the first connecting section and the second connecting section by the two end portions.
(6) In the stand device according to any one of (1) through (5) described above, an attachment hole may not be formed through at least one connecting section of the first connecting section and the second connecting section.
(7) In the stand device according to any one of (1) through (6) described above, at least one connecting section of the first connecting section and the second connecting section may be formed at an inner circumference of the support member, and an outer circumference of the support member may be exposed through the attachment member at the at least one connecting section.
(8) In the stand device according to any one of (1) through (7) described above, the support member may have a circular shape.
(9) In the stand device according to any one of (1) through (8) described above, the support member may be formed using metal.
(10) In the stand device according to any one of (1) through (9) described above, the attachment member may have a facing surface that faces the electronic apparatus, and the facing surface may include a surface that contacts an outer surface of the electronic apparatus and a surface that ensures a gap between the attachment member and an outer surface of the electronic apparatus.

## Claims

1. A electronic-apparatus stand device comprising:
an annular support member; and
an attachment member that is attached to the support member and is capable of being attached to an electronic apparatus in a first direction, wherein
the support member has
a first connecting section and a second connecting section to which the attachment member is attached, and
a first support section and a second support section that are positioned opposite to each other with the attachment member being interposed therebetween in a second direction crossing the first direction.

2. The stand device according to claim 1, wherein
the attachment member includes a base member and a cover member, and
the base member and the cover member are combined with each other in the first direction to sandwich at least one connecting section of the first connecting section and the second connecting section, and are attached to the at least one connecting section.

3. The stand device according to claim 2, wherein the base member and the cover member are combined with each other in the first direction to sandwich both the first connecting section and the second connecting section, and are attached to the first connecting section and the second connecting section.

4. The stand device according to claim 1, wherein the attachment member has an end portion that sandwiches at least one connecting section of the first connecting section and the second connecting section in the first direction, and is attached to the at least one connecting section by the end portion.

5. The stand device according to claim 4, wherein the attachment member has two end portions that sandwich the first connecting section and the second connecting section in the first direction, respectively, and is attached to the first connecting section and the second connecting section by the two end portions.

6. The stand device according to claim 1, wherein an attachment hole is not formed through at least one connecting section of the first connecting section and the second connecting section.

7. The electronic-apparatus stand according to claim 1, wherein
at least one connecting section of the first connecting section and the second connecting section is formed at an inner circumference of the support member, and
an outer circumference of the support member is exposed through the attachment member at the at least one connecting section.

8. The stand device according to claim 1, wherein the support member has a circular shape.

9. The stand device according to claim 1, wherein the support member is formed using metal.

10. The stand device according to claim 1, wherein
the attachment member has a facing surface that faces the electronic apparatus, and
the facing surface includes a surface that contacts an outer surface of the electronic apparatus and a surface that ensures a gap between the attachment member and an outer surface of the electronic apparatus.
